# EUROPEAN PATENT SPECIFICATION

(11) **EP 0 261 976 B1**
(45) Date of publication and mention of the grant of the patent: **08.09.1993**
(21) Application number: 87308478.4
(22) Date of filing: 25.09.1987
(51) Int. Cl.: C08G 63/60, C08G 63/91

(54) **Process for the preparation of copolyesters which show anisotropy when molten**
Verfahren zur Herstellung von Copolyesters, die Anisotropie in geschmolzenem Zustand zeigen
Procédé de fabrication de copolyesters, qui montrent de l'anisotropie à l'état fondu

(30) Priority: 26.09.1986 JP 227631/86
(43) Date of publication of application: 30.03.1988
(73) Proprietor: POLYPLASTICS CO. LTD., Higashi-ku Osaka-shi Osaka (JP)
(72) Inventor: Kageyama, Yukihiko, Fujinomiya-shi Shizuoka (JP); Nakane Toshio, Fuji-shi Shizuoka (JP); Hijikata, Kenji, Mishima-shi Shizuoka (JP)
(74) Representative: Taylor, Phillip Kenneth

(56) References cited:
- EP-A- 0 159 875
- US-A- 3 288 755
- US-A- 3 778 410
- PATENT ABSTRACTS OF JAPAN volume 9, no. 59 (C-270) (1782), 15th March 1985; JP-A-59 193 921
- PATENT ABSTRACTS OF JAPAN volume 6, no. 102 (C-107) (1980), 11th June 1982; & JP-A-57 34123

## Description

The present invention relates to an improved process for preparing a copolyester which shows anisotropy when molten.

Liquid-crystal polymers which show anisotropy when molten have recently attracted attention as being polyesters having high strength and high heat resistance and having excellent moldability.

As a means for imparting anisotropy in the molten state, a method has been proposed in which a monomer manifesting a rigidity, which is called a "mesogen", is combined with a monomer manifesting a softness, which is called a "soft spacer". Typical instances of this method are disclosed in Japanese Patent Application Laid-Open Specification No. 72393/1974, No. 43223/1975 and No. 50594/1979.

Of these known methods, the method of W.J. Jackson et al. in which a polyalkylene terephthalate, which is a known crystalline polymer, is reacted with acetoxylated hydroxybenzoic acid to obtain a liquid-crystal polymer (Japanese Patent Application Laid-Open specification No. 72393/1974, US-A-3 778 410) is industrially advantageous as providing a simple means for introduction of the mesogen.

In the Jackson method, however, since an acetoxylated hydroxybenzoic acid is used as the mesogen, a homopolymer of the hydroxybenzoic acid is also readily formed, and when the liquid crystal polymer product is formed into a film, fibre or the like, this homopolymer remains as an infusible substance and forms defects in the film or fibre.

Furthermore, in the transesterification, an increase in the degree of polymerisation is difficult because of random reactivity of the polyalkylene terephthalate. Moreover, since this method includes the step of removing acetic acid under heating, corrosion of a reaction vessel and pipes is extreme, and use of a special material such as Hastelloy and processing of the material become necessary, resulting in an increase in the cost of the preparation apparatus.

The introduction of a terminal group having the formula -O-CO-Ph-X wherein X is OH, F, Cl, BY, CN or NH₃ into a polyester formed by polycondensation of a dibasic carboxylic acid mainly comprising terephthalic acid with at least one glycol or ester forming derivative thereof is described in Japanese Patent laid-open number 193921/1984. The introduction of the terminal group is effected by adding a compound of the general formula R-O-CO-Ph-X wherein R is H or alkyl and X is as defined above after the initiation of the polycondensation (e.g. 60 minutes after initiation of the polycondensation) to provide 10 equivalent or more of the said terminal group per 10⁶ gm of polyester. The amount of the compound of the said formula -O-CO-Ph-X added is stated to be generally 1.6 mole % or above, preferably 2 mole % or above, still more preferably 2-10 mole %, but must not be so much that a large amount of the compound will be incorporated into the inside of the polyester polymer chains which as a result will be poor in molecular regularity and therefore difficult to orient or crystallize and which will cause retardation of the polycondensation.

The present invention has for its object the development of a process for preparing industrially advantageously a high-quality liquid-crystal polymer showing anisotropy when molten with reduced corrosion while controlling formation of an infusible substance. It has now been found that a specific hydroxybenzoic acid ester is effective in forming a copolymer meeting the object of the present invention.

The process of the present invention comprises reacting a polyester with a hydroxy-aromatic carboxylic ester to effect the transesterification and then further polymerizing the product. The process is conducted so that the obtained product has a high molecular weight and does not contain impurities, without corrosion of a used reactor.

In accordance with the present invention, there is provided a process for the preparation of a copolyester which shows anisotropy when molten, which is characterized by reacting a polyester (A) having as the main recurring units dicarboxylic acid-diol units represented by the following general formula: 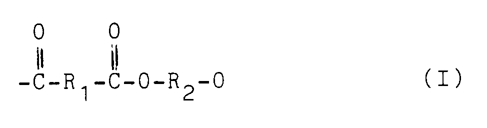
wherein R₁ stands for an aromatic divalent radical having 6 to 20 carbon atoms or an aliphatic divalent radical having 4 to 20 carbon atoms, and R₂ stands for at least one radical selected from the group consisting of aromatic divalent radicals having 6 to 20 carbon atoms and aliphatic divalent radicals having 2 to 20 carbon atoms, with at least one hydroxy carboxylic acid ester (B) represented by the general formula: 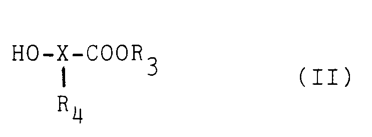
wherein R₃ stands for an aliphatic hydrocarbon, aromatic hydrocarbon or hydroxy-substituted aliphatic hydrocarbon radical having 2 to 20 carbon atoms, R₄ stands for a hydrogen atom, a halogen atom or an aliphatic hydrocarbon or alkoxyl radical having 1 to 4 carbon atoms, and X stands for a radical of a compound having 5 to 20 carbon atoms and which includes at least one aromatic ring, and subjecting the obtained transesterification product to polymerization to obtain a polymer having an inherent viscosity of least 0.4.

Since acetic acid is not used as an acylating agent in the method of the present invention, there is no risk of corrosion of the reaction vessel under heating. Furthermore formation of a homopolymer of the hydroxy carboxylic ester is slight so that an insoluble and infusible substance is hardly formed. Moreover, surprisingly, the degree of polymerization is unexpectedly increased in the obtained copolyester.

The polyester having the dicarboxylic acid-diol units as the main units, which is used in the present invention, includes polyesters customarily used in the production of copolyesters showing anisotropy when molten, such as polyethylene terephthalate and polybutylene terephthalate, and copolyesters composed mainly thereof.

R₁ in formula I may be for example phenylene, naphtylene, biphenylene, 1,1-alkylenebiphenylene and substituted derivatives thereof and/or linear, branched and cyclic aliphatic hydrocarbons having 4, 5, 6, 7, 8, 16, 17 or 18 carbon atoms. Aromatic compounds such as phenylene, naphthylene and biphenylene are preferred, and phenylene is especially preferred.

As specific examples of R₂ in formula I there can be mentioned aromatic compounds such as phenylene, naphthylene, biphenylene 1,1ʹ-alkylenebiphenylene and substituted derivatives thereof and/or linear, branched and cyclic aliphatic hydrocarbons having 2 to 8 carbon atoms, and R₂ is at least one group selected from these compounds. Phenylene, 1,1ʹ-alkylenephenylene and alkylene groups having 2 to 4 carbon atoms are preferred, and an alkylene group having 2 to 4 carbon atoms is especially preferred.

As preferred examples of compounds having specific combinations of R₁ and R₂, there can be mentioned a polyarylate in which R₁ is phenylene and R₂ is 1,1ʹ-alkylenephenylene, polyethylene terephthalate in which R₁ is phenylene and R₂ is ethylene, and polybutylene terephthalate in which R₁ is phenylene and R₂ is butylene, among which polyethylene terephthalate and polybutylene terephthalate are especially preferred. The degree of polymerization of the polyester (A) as the starting material is not particularly critical, but with a view to ease of reaction, an oligomer and a polymer having a low degree of polymerization are preferred. A preferred intrinsic viscosity is from 0.3 to 0.7. The polyester may contain, in addition to the ester linkage units (I), other linkage units such as amide, imide or ether linkage units. However, in view of possible reactivity with the hydroxy carboxylic acid ester represented by the general formula (II), it is preferred that the content of linkage units other than the ester linkage units (I) be up to 30 mole % in the polyester.

In the hydroxy carboxylic acid ester represented by the general formula (II), R₄ stands for a hydrogen atom, a halogen atom or an aliphatic hydrocarbon or alkoxyl radical having 1 to 4 carbon atoms. Preferably R₄ is hydrogen,halogen or an aliphatic hydrocarbon having one carbon atom, and most preferably R₄ is hydrogen. R₃ stands for an aliphatic hydrocarbon, aromatic hydrocarbon or hydroxy-substituted aliphatic hydrocarbon radical having 2 to 20 carbon atoms. Preferably R₃ is an aliphatic hydrocarbon radical having 2 to 6 carbon atoms, an aromatic hydrocarbon radical having 6 carbon atoms or a hydroxy-substituted aliphatic hydrocarbon radical having 2 to 4 carbon atoms. X stands for a radical of a compound having at least one aromatic ring having 5 to 20 carbon atoms and may for example be at least one radical selected from p-phenylene, 4,4ʹ-biphenylene, 4,4-alkylenebiphenylene and 2,6-naphthalene. Preferably X is p-phenylene radical and/or a 2,6-naphthalene radical.

Preferred examples of the hydroxy carboxylic acid ester (B) are butyl, phenyl, alkyl-substituted phenyl, hydroxy-ethyl and hydroxybutyl esters of hydroxybenzoic acid and ethyl, butyl, phenyl, alkyl-substituted phenyl, hydroxyethyl and hydroxybutyl esters of hydroxy-naphthoic acid.

The composition ratio of the hydroxy aromatic carboxylic acid ester to the polyester may be from 5/95 to 95/5, preferably from 20/80 to 80/20, especially preferably from 50/50 to 70/30.

The first step of the preparation process of the present invention is a transesterification between the polyester and the hydroxy aromatic carboxylic acid ester and the second step produces an increase in the degree of polymerization. In the first step, the polyester (which may be an oligomer) and the hydroxy aromatic carboxylic acid ester are heated at 150 to 350°C, preferably 200 to 300°C, under atmospheric pressure in a reaction vessel.

In the second step, the temperature of the reaction system is elevated to distill off the hydroxy compound eliminated from the hydroxy aromatic carboxylic acid ester from the reaction system, and then the pressure is gradually reduced to completely remove residual hydroxy compound. Thus, the polymerization is completed.

It is preferred that in the second step the degree of polymerization be increased to such an extent that the inherent viscosity of the copolyester is at least 0.4. In general, the inherent viscosity is a factor indicating the degree of polymerization of a polymer. If the inherent viscosity of the polymer is lower than 0.4, the moldability, mechanical strength and chemical resistance of the polymer per se are poor, and a copolyester having excellent mechanical characteristics cannot be obtained. However, even if the inherent viscosity is lower than 0.4, the copolyester being an oligomer, may be used after modification as a compatibilizing agent or polymer modifier.

In carrying out the present invention, the reaction can be efficiently advanced by using catalysts.

As the catalyst for the first step, there can be mentioned tin compounds (such as dibutyltin oxide and stannous acetate) and antimony compounds (such as antimony trioxide), and as the catalyst for the second step, there can be mentioned titanium compounds (such as potassium titanate) and zinc compounds (such as zinc acetate). These compounds can be used singly or in the form of a mixture of two or more of them. The amount of the catalyst added is 50 to 5,000 ppm, preferably 200 to 2,000 ppm, based on the formed polymer.

Because acidolysis by an acetoxy group is substantially absent, the copolyester obtained according to the present invention has a high degree of polymerization. Accordingly, the strength is high, and if the copolyester is formed into a film or the like, the amount of infusible substance present in the film is very small so that acid recovery in a hot state is not necessary. Therefore, an inexpensive apparatus can be used in industrial manufacture. The process of the present invention is excellent as means for obtaining a liquid-crystal polyester showing anisotropy when molten.

The present invention will now be further illustrated with reference to the following examples which are purely illustrative of the present invention.

The properties referred to in the following examples were determined and evaluated according to the following methods.

### Inherent Viscosity

The inherent viscosity is the logarithmic viscosity number determined with respect to a 0.1% by weight solution in pentachloriphenol at 60°C.

### Melt Anisotropy

The anisotropy in a molten state is determined based on permeation through cross polarizers on a hot stage in a nitrogen atmosphere.

### Tensile Strength

A test piece is prepared from the obtained polymer by using an injection molding machine, and the tensile strength is measured according to ASTM D-638.

### Concentration of Infusible Substance

The polymer is dissolved in pentachlorophenol at 60°C at a concentration of 0.1% by weight, the solution is filtered while it is hot, and the amount of the insoluble substance is measured.

### Example 1

A reaction vessel equipped with a stirrer, a nitrogen inlet tube and a distillation tube was charged with 1024 parts by weight of polybutylene terephthalate having an inherent viscosity of 0.60, 1284 parts by weight of phenyl p-hydroxybenzoate and 0.5 part by weight of dibutyltin oxide as the catalyst and the mixture was heated at 250°C in a current of nitrogen. The temperature was elevated to 275°C over a period of 1 hour and the mixture was vigorously stirred for 1 hour. Introduction of nitrogen was stopped and the pressure in the reaction vessel was gradually reduced to 0.4 mmHg over a period of 30 minutes. The mixture was stirred for an additional 5 hours.

The resulting polymer showed anisotropy when molten, and its inherent viscosity was 1.2, its tensile strength was 940 kg/cm² and the insoluble substance content of the polymer was 0.19% by weight.

### Example 2

A reaction vessel equipped with a stirrer, a nitrogen inlet tube and a distillation tube was charged with 1024 parts by weight of polybutylene terephthalate having an inherent viscosity of 0.60 and 1260 parts by weight of butyl p-hydroxybenzoate, and the mixture was heated at 250°C in a current of nitrogen. The temperature was elevated to 275°C over a period of 1 hour and the mixture was violently stirred for 1 hour. Then, introduction of nitrogen was stopped and the pressure in the reaction vessel was gradually reduced to 0.4 mmHg over a period of 30 minutes. The mixture was further stirred for 5 hours.

The resulting polymer showed anisotropy when molten, and had an inherent viscosity of 1.9, a tensile strength of 1200 kg/cm² and an insoluble substance content of 0.17% by weight.

### Example 3

A reaction vessel equipped with a stirrer, a nitrogen inlet tube and a distillation tube was charged with 1024 parts by weight of polybutylene terephthalate having an inherent viscosity of 0.60 and 1584 parts by weight of phenyl 2-hydroxy-6-naphthoate, and the mixture was heated at 250°C in a current of nitrogen. The temperature was elevated to 275°C over a period of 1 hour and the mixture was vigorously stirred for 1 hour. Then, introduction of nitrogen was stopped and the pressure in the reaction vessel was gradually reduced to 0.4 mmHg over a period of 30 minutes. The mixture was stirred for an additional 5 hours.

The obtained polymer showed anisotropy when molten, and had an inherent viscosity of 1.4, a tensile strength of 950 kg/cm² and an insoluble substance content of 0.17% by weight.

### Example 4

A reaction vessel equipped with a stirrer, a nitrogen inlet tube and a distillation tube was charged with 1024 parts by weight of polybutylene terephthalate having an inherent viscosity of 0.60, 856 parts by weight of phenyl p-hydroxybenzoate and 528 parts by weight of phenyl 2-hydroxy-6-naphthoate, and the mixture was heated at 250°C in a current of nitrogen. The temperature was elevated to 275°C over a period of 1 hour and the mixture was vigorously stirred for 1 hour. Then, introduction of nitrogen was stopped and the pressure in the reaction vessel was gradually reduced to 0.4 mmHg over a period of 30 minutes. The mixture was further stirred for 5 hours.

The obtained polymer showed anisotropy when molten, and had an inherent viscosity of 1.6, a tensile strength of 1240 kg/cm² and an insoluble substance content of 0.18% by weight.

### Example 5

A reaction vessel equipped with a stirrer, a nitrogen inlet tube and a distillation tube was charged with 768 parts by parts of polyethylene terephthalate having an inherent viscosity of 0.62 and 1284 parts by weight of phneyl p-hydroxybenzoate, and the mixture was heated at 250°C in a current of nitrogen. The temperature was elevated to 275°C over a period of 1 hour and the mixture was vigorously stirred for 1 hour. Then introduction of nitrogen was stopped and the pressure in the reaction vessel was gradually reduced to 0.4 mmHg over a period of 30 minutes. The mixture was further stirred for 5 hours.

The obtained polymer showed anisotropy when molten, and had an inherent viscosity of 0.80, a tensile strength of 1250 kg/cm² and an insoluble substance content of 0.19% by weight.

### Example 6

A reaction vessel equipped with a stirrer, a nitrogen inlet tube and a distillation tube was charged with 768 parts by weight of polyethylene terephthalate having an inherent viscosity of 0.62 and 1092 parts by weight of hydroxyethyl p-hydroxybenzoate, and the mixture was heated at 250°C in a current of nitrogen. The temperature was elevated to 275°C over a period of 1 hour and the mixture was vigorously stirred for 1 hour. Then,introduction of nitrogen was stopped and the pressure in the reaction vessel was gradually reduced to 0.4 mmHg over a period of 30 minutes. The mixture was stirred for an additional 5 hours.

The obtained polymer showed anisotropy when molten, and had an inherent viscosity of 0.84,a tensile strength of 1270 kg/cm² and an insoluble substance content of 0.16% by weight.

### Comparative Example 1

A reaction vessel equipped with a stirrer, a nitrogen inlet tube and a distillation tube was charged with 1024 parts by weight of polybutylene terephthalate and 1080 parts by weight of p-acetoxybenzoic acid, and the mixture was heated at 250°C in a current of nitrogen. The temperature was elevated to 275°C over a period of 1 hour and the mixture was vigorously stirred for 1 hour. Then, introduction of nitrogen was stopped and the pressure in the reaction vessel was gradually reduced to 0.4 mmHg over a period of 30 minutes. The mixture was further stirred for 5 hours.

The obtained polymer showed anisotropy when molten, and had an inherent viscosity of 0.64, a tensile strength of 850 kg/cm² and an insoluble substance content of 0.30% by weight.

### Comparative Example 2

A reaction vessel equipped with a stirrer, a nitrogen inlet tube and a distillation tube was charged with 768 parts by weight of polyethylene terephthalate having an inherent viscosity of 0.62 and 1080 parts by weight of p-acetoxybenzoic acid, and the mixture was heated at 250°C in a current of nitrogen. The temperature was elevated to 275°C over a period of 1 hour and the mixture was vigorously stirred for 1 hour. Then, introduction of nitrogen was stopped and the pressure in the reaction vessel was gradually reduced to 0.4 mmHg over a period of 30 minutes. The mixture was stirred for an additional 5 hours.

The obtained polymer showed anisotropy when molten, and had an inherent viscosity of 0.65, a tensile strength of 1100 kg/cm² and an insoluble substance content of 0.31% by weight.

## Claims

1. A process for the preparation of a copolyester which shows an anisotropy when molten, characterized by reacting a polyester (A) having as the main recurring units dicarboxylic acid-diol units represented by the following general formula (I): 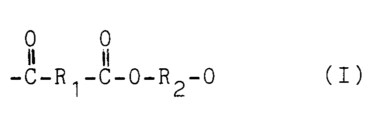 wherein R₁ stands for an aromatic divalent radical having 6 to 20 carbon atoms or an aliphatic divalent radical having 4 to 20 carbon atoms, and R₂ stands for at least one radical selected from the group consisting of aromatic divalent radicals having 6 to 20 carbon atoms and aliphatic divalent radicals having 2 to 20 carbon atoms, with at least one hydroxy carboxylic acid ester (B) represented by the following general formula (II): 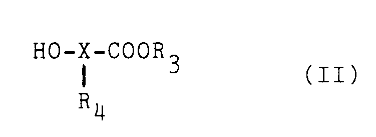 wherein R₃ stands for an aliphatic hydrocarbon, aromatic hydrocarbon or hydroxy-substituted aliphatic hydrocarbon radical having 2 to 20 carbon atoms, R₄ stands for a hydrogen atom, a halogen atom or an aliphatic hydrocarbon or alkoxyl radical having 1 to 4 carbon atoms, and X stands for a radical of a compound having 5 to 20 carbon atoms and which includes at least one aromatic ring, and subjecting the obtained transesterification product to polymerization to obtain a polymer having an inherent viscosity of at least 0.4.

2. A process according to claim 1, characterised in that X in the general formula (II) is at least one member selected from the group consisting of p-phenylene, 4,4-biphenylene, 4,4-alkylenebiphenylene and 2,6-naphthalene.

3. A process according to claim 2, characterised in that X in the general formula (II) is p-phenylene and/or 2,6-naphthalene.

4. A process according to any of claims 1 to 3, characterized in that R³ in the general formula (II) is selected from the group consisting of aromatic hydrocarbon radicals having 6 to 10 carbon atoms and aliphatic hydrocarbon and hydroxy-substituted aliphatic hydrocarbon radicals having 2 to 10 carbon atoms.

5. A process according to claim 4, characterized in that R₃ is selected from the group consisting of a phenyl group, a naphthyl group, an ethyl group, a propyl group, a butyl group, a pentyl group, a hexyl group, a hydroxyethyl group, a hydroxypropyl group, a hydroxybutyl group, a hydroxypentyl group, a hydroxyhexyl group and a hydroxycyclohexyl group.

6. A process according to claim 5, characterized in that R₃ is selected from the group consisting of a phenyl group, an ethyl group, a butyl group, a hydroxyethyl group and a hydroxybutyl group.

7. A process according to any of claims 1 to 6, wherein R₁ is mainly phenylene and R₂ is an aliphatic divalent radical having 2 to 8 carbon atoms.

8. A process according to claim 1, characterised in that the polyester (A) is mainly polyethylene terephthalate or polybutylene terephthalate.

## Patentansprüche

1. Verfahren zur Herstellung eines Copolyesters, der Anisotropie in geschmolzenem Zustand zeigt, dadurch **gekennzeichnet,** daß ein Polyester (A), der als hauptsächliche Grundeinheiten Dicarbonsäure-Diol-Einheiten enthält, dargestellt durch die folgende allgemeine Formel (I): 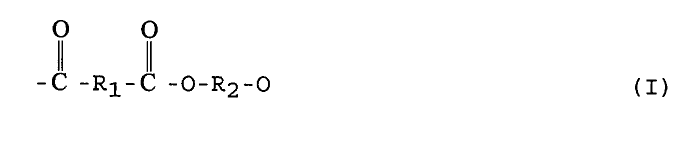 worin R₁ für ein aromatisches zweiwertiges Radikal mit 6 bis 20 Kohlenstoffatomen oder ein aliphatisches zweiwertiges Radikal mit 4 bis 20 Kohlenstoffatomen steht und R₂ für mindestens ein Radikal, ausgewählt aus der Gruppe bestehend aus aromatischen zweiwertigen Radikalen mit 6 bis 20 Kohlenstoffatomen und aliphatischen zweiwertigen Radikalen mit 2 bis 20 Kohlenstoffatomen, steht, mit mindestens einem Hydroxycarbonsäureester (B), dargestellt durch die folgende allgemeine Formel (II), umgesetzt wird: 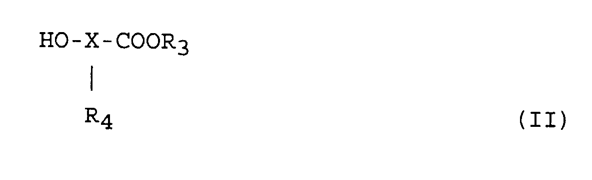 worin R₃ für ein aliphatisches Kohlenwasserstoff-, aromatisches Kohlenwasserstoff- oder hydroxysubstituiertes aliphatisches Kohlenwasserstoffradikal mit 2 bis 20 Kohlenstoffatomen steht, R₄ für ein Wasserstoffatom, ein Halogenatom oder ein aliphatisches Kohlenwasserstoff- oder Alkoxyradikal mit 1 bis 4 Kohlenstoffatomen steht und X für ein Radikal einer Verbindung mit 5 bis 20 Kohlenstoffatomen steht, das mindestens einen aromatischen Ring einschließt, und daß man das erhaltene Umesterungsprodukt der Polymerisation unterwirft, wodurch man ein Polymer mit einer inhärenten Viskosität von mindestens 0,4 erhält.

2. Verfahren gemäß Anspruch 1, dadurch **gekennzeichnet,** daß X in der allgemeinen Formel (II) mindestens ein Vertreter ist, der ausgewählt ist aus der Gruppe, bestehend aus p-Phenylen, 4,4-Biphenylen, 4,4-Alkylenbiphenylen und 2,6-Naphthalen.

3. Verfahren gemäß Anspruch 2, dadurch **gekennzeichnet,** daß X in der allgemeinen Formel (II) p-Phenylen und/oder 2,6-Naphthalen ist.

4. Verfahren gemäß einem der Ansprüche 1 bis 3, dadurch **gekennzeichnet,** daß R₃ in der allgemeinen Formel (II) ausgewählt ist aus der Gruppe, bestehend aus aromatischen Kohlenwasserstoffradikalen mit 6 bis 10 Kohlenstoffatomen und aliphatischen Kohlenwasserstoff- und hydroxysubstituierten aliphatischen Kohlenwasserstoffradikalen mit 2 bis 10 Kohlenstoffatomen.

5. Verfahren gemäß Anspruch 4, dadurch **gekennzeichnet,** daß R₃ ausgewählt ist aus der Gruppe, bestehend aus einer Phenylgruppe, einer Naphthylgruppe, einer Ethylgruppe, einer Propylgruppe, einer Butylgruppe, einer Pentylgruppe, einer Hexylgruppe, einer Hydroxyethylgruppe, einer Hydroxypropylgruppe, einer Hydroxybutylgruppe, einer Hydroxypentylgruppe, einer Hydroxyhexylgruppe und einer Hydroxycyclohexylgruppe.

6. Verfahren gemäß Anspruch 5, dadurch **gekennzeichnet,** daß R₃ ausgewählt ist aus der Gruppe, bestehend aus einer Phenylgruppe, einer Ethylgruppe, einer Butylgruppe, einer Hydroxyethylgruppe und einer Hydroxybutylgruppe.

7. Verfahren gemäß einem der Ansprüche 1 bis 6, dadurch **gekennzeichnet,** daß R₁ hauptsächlich Phenylen und R₂ ein aliphatisches zweiwertiges Radikal mit 2 bis 8 Kohlenstoffatomen ist.

8. Verfahren gemäß Anspruch 1, dadurch **gekennzeichnet,** daß der Polyester (A) hauptsächlich Polyethylenterephthalat oder Polybutylenterephthalat ist.

## Revendications

1. Procédé pour la préparation d'un copolyester qui fait montre d'anisotropie à l'état fondu, caractérisé en ce qu'on fait réagir un polyester (A) dont les principaux motifs récurrents sont des motifs d'acide dicarboxyliquediol représentés par la formule générale suivante : 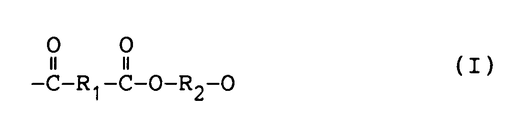 dans laquelle R₁ représente un radical aromatique divalent ayant 6 à 20 atomes de carbone ou un radical aliphatique divalent ayant 4 à 20 atomes de carbone, et R₂ représente au moins un radical choisi dans le groupe formé par les radicaux aromatiques divalents ayant 6 à 20 atomes de carbone et les radicaux aliphatiques divalents ayant 2 à 20 atomes de carbone, avec au moins un ester d'hydroxy-acide carboxylique (B) représenté par la formule générale suivante : 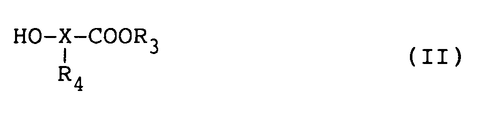 dans laquelle R₃ représente un radical hydrocarboné aliphatique, hydrocarboné aromatique ou hydrocarboné aliphatique hydroxylé ayant 2 à 20 atomes de carbone, R₄ représente un atome d'hydrogène, un atome d'halogène ou un radical hydrocarboné aliphatique ou alcoxy ayant 1 à 4 atomes de carbone, et X représente un radical d'un composé ayant 5 à 20 atomes de carbone et comprenant au moins un cycle aromatique, et l'on soumet le produit de transestérification obtenu à une polymérisation pour obtenir un polymère ayant une viscosité inhérente d'au moins 0,4.

2. Procédé selon la revendication 1, caractérisé en ce que X dans la formule générale (II) est au moins un membre du groupe formé par les radicaux *p*-phénylène, 4,4-biphénylène, 4,4-alkylène-biphénylène et 2,6-naphtylène.

3. Procédé selon la revendication 2, caractérisé en ce que X dans la formule générale (II) est un radical *p*-phénylène et/ou 2,6-naphtylène.

4. Procédé selon l'une quelconque des revendications 1 à 3, caractérisé en ce que R₃ dans la formule générale (II) est choisi dans le groupe formé par les radicaux hydrocarbonés aromatiques ayant 6 à 10 atomes de carbone et les radicaux hydrocarbonés aliphatiques et hydrocarbonés aliphatiques hydroxylés ayant 2 à 10 atomes de carbone.

5. Procédé selon la revendication 4, caractérisé en ce que R₃ est choisi dans le groupe formé par un groupe phényle, un groupe naphtyle, un groupe éthyle, un groupe propyle, un groupe butyle, un groupe pentyle, un groupe hexyle, un groupe hydroxyéthyle, un groupe hydroxypropyle, un groupe hydroxybutyle, un groupe hydroxypentyle, un groupe hydroxyhexyle et un groupe hydroxycyclohexyle.

6. Procédé selon la revendication 5, caractérisé en ce que R₃ est choisi dans le groupe formé par un groupe phényle, un groupe éthyle, un groupe butyle, un groupe hydroxyéthyle et un groupe hydroxybutyle.

7. Procédé selon l'une quelconque des revendications 1 à 6, dans lequel R₁ est principalement un radical phénylène et R₂ est un radical aliphatique divalent ayant 2 à 8 atomes de carbone.

8. Procédé selon la revendication 1, caractérisé en ce que le polyester (A) est principalement du polytéréphtalate d'éthylène ou du polytéréphtalate de butylène.
